# EUROPEAN PATENT APPLICATION

(11) **EP 2 365 231 A1**
(43) Date of publication of application: **14.09.2011**
(21) Application number: 11157446.3
(22) Date of filing: 09.03.2011
(51) Int. Cl.: F16H 55/56, F16H 55/54

(54) **Self-tensioning pulley apparatus for belt drive**

(30) Priority: 10.03.2010 US 721348
(71) Applicant: Lin, Pan-Chien, Hsinchu County (TW)
(72) Inventor: Lin, Pan-Chien, Hsinchu County (TW)
(74) Representative: Becker Kurig Straus

(57) **Abstract**

A pulley apparatus (100) of a belt drive comprises a first and a second pulley means (110, 120) and a belt bearing means (130). First pulley means (110) is fixed coaxial to the power shaft (160) and has a first pitch setting means (141). Second pulley means (120) is coaxially rotatable relative to the first (110) and has a second pitch setting means (142). Belt bearing means (130) maintains a gross bearing surface to bear the belt (180) at a pitch (140) by a cooperation with the two pitch setting means (141, 142). Transmission of power loads the pulley apparatus (100) wherein the two pulley means (110, 120) and the belt bearing means (130) all rotate together in the same direction at the same speed while the second pulley means (120) is induced by the loading to rotate relative to the first (110) in the opposite direction. The load-induced relative rotation increases the pitch (140) by adjustment in the cooperation until fixed length of the belt (180) allows no further relative movement between the two pulley means (110, 120). Belt tension due to transmission load induces increased belt pressure onto the belt bearing means (130) to prevent belt slip in the pulley apparatus (100) for sustained power transmission.

## Description

### BACKGROUND

### Field of the Invention

The present invention relates in general to belt drives and, in particular, to a pulley apparatus of a belt drive for the transmission of rotary mechanical power. More particularly, the present invention relates to a variable-pitch and self-tensioning pulley apparatus for belt drives.

### Description of the Related Art

All belt drives, whether fixed or variable speed, require proper belt tensioning for optimized operation in the transmission of rotary mechanical power. Without sufficient tensioning, the belt slips under increased load. If tensioning is excessive, components of the drive such as belt and bearings suffer premature wear.

To provide adequate tensioning in fixed speed drives, typically either the distance between the driving and driven pulleys must be adjusted or a tensioning idler be provided that presses onto the belt. Both require adjustment over time when the effective belt length varies as the belt ages and eventually wears out. In the case of variable speed application such as the common drives based on varying-pitch cones, various means provide the necessary belt-tensioning either through active servo or via simple but imprecise mechanism.

### SUMMARY OF THE INVENTION

It is an object of the present invention to provide a pulley apparatus for a belt drive that is self-tensioning for the transmission of rotary mechanical power in fixed and variable speed applications.

In order to achieve the above and other objects, the present invention provides a pulley apparatus of a belt drive for transmitting rotary power through a power shaft using a belt that comprises a first and a second pulley means and a belt bearing means. The first pulley means is fixed coaxial to the power shaft and has a first pitch setting means. The second pulley means is coaxially rotatable relative to the first pulley means and has a second pitch setting means. The belt bearing means maintains a gross bearing surface to bear the belt at a pitch by a cooperation with the first and second pitch setting means. Transmission of power loads the pulley apparatus wherein the first and second pulley means and the belt bearing means all rotate together in the same direction at the same speed while the second pulley means is induced by the loading to rotate relative to the first in the opposite direction. The load-induced relative rotation increases the pitch by adjustment in the cooperation between the belt bearing means and the first and second pitch setting means until fixed length of the belt allows no further relative movement between the two pulley means. Increased belt tension due to increased transmitted power induces increased pressure of the belt onto the belt bearing means prevents belt slip in the pulley apparatus for a sustained power transmission.

### BRIEF DESCRIPTION OF THE DRAWINGS

FIG. 1 schematically outlines a belt drive with a self-tensioning pulley apparatus of the present invention.
FIG. 2 shows a self-tensioning pulley apparatus in accordance with an embodiment of the present invention having a cone-based pulley means.
FIG. 3 is the cross section of the cone-based pulley apparatus of FIG. 2.
FIG. 4 is the cross section of another cone-based pulley apparatus.
FIG. 5 shows a pulley apparatus based on disc pulley means having intersecting radial slots.
FIG. 6 is the cross section of the pulley apparatus of FIG. 5.
FIG. 7 explains the belt tightening mechanism of the pulley apparatus of FIG. 5.
FIG. 8 illustrates the cooperation of the belt bearing pin, tilted radial slot and pin deploying radial slot for the type of pulley apparatus of FIG. 5.
FIG. 9 details the cooperation of FIG. 8.
FIG. 10 illustrates the cooperation of the belt bearing pin, tilted radial slot and pin deploying radial slot for another of the type of pulley apparatus of FIG. 5.
FIG. 11 shows a belt bearing pin for the pulley apparatus of FIG. 10 that is free from on-site spinning.
FIG. 12 illustrates the cooperation of the belt bearing pin, tilted radial slot and pin deploying radial slot for yet another of the type of pulley apparatus of FIG. 5.
FIG. 13 shows a belt bearing pin assembly for the pulley apparatus of FIG. 12 that is free from on-site spinning.
FIG. 14 shows a pulley apparatus based on disc pulley means having inwardly swinging belt bearing pins.
FIG. 15 shows a pulley apparatus based on disc pulley means having outwardly swinging belt bearing pins.
FIG. 16 illustrates the cooperation of the belt bearing swinging pin, pin arm and pin deploying radial slot for the type of pulley apparatus of FIG. 14.
FIG. 17 explains the belt tightening mechanism of the pulley apparatus of FIG. 14.
FIG. 18 shows a pulley apparatus based on swiveling pins actuated by disc pulley means.
FIG. 19 is the side view of the pulley apparatus of FIG. 18.
FIG. 20 schematically outlines a variable speed belt drive having a self-tensioning pulley apparatus used as the driven pulley.

### DETAILED DESCRIPTION OF THE PREFERRED EMBODIMENTS

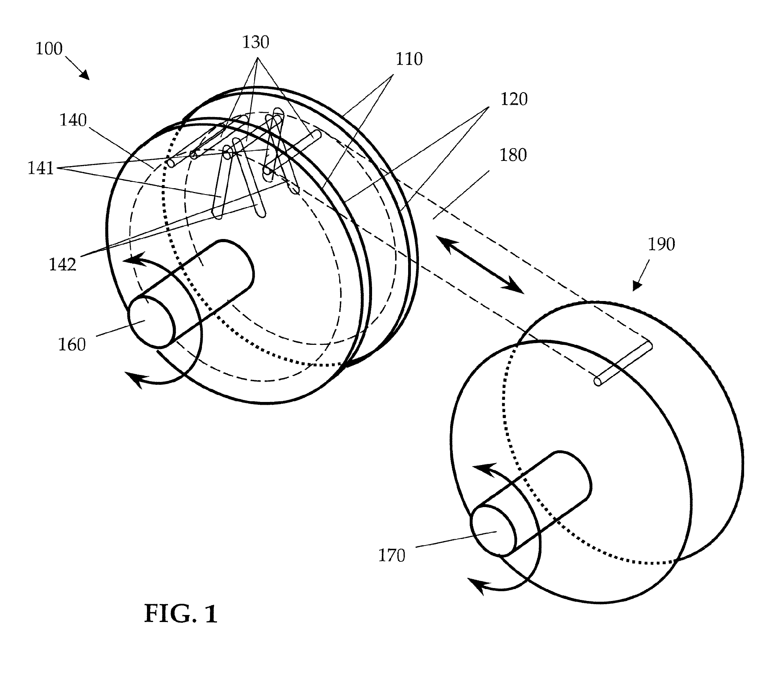

For both fixed and variable speed belt drive applications, the construction of a self-tensioning pulley apparatus of the present invention is schematically outlined in FIG. 1. The pulley apparatus, a self-tensioning pulley assembly used either as the driving 100 or driven pulley member 190 of a belt drive for the transmission of rotary power through a power shaft (160 and 170) using a belt 180, has a first pulley means 110, a second pulley means 120, and a belt bearing means 130.

According to the present invention, the first pulley means 110 is fixed coaxial to the power shaft 160 and has a first pitch setting means 141. The second pulley means 120 is coaxially rotatable relative to the first pulley means 110 and has a second pitch setting means 142. The belt bearing means 130 can be used to maintain a gross bearing surface to bear the belt at a pitch 140 (generally shown in the drawing as a phantom circle) by a cooperation with the first 141 and second pitch setting means 142.

In operation, transmission of power loads the entire pulley apparatus 100 so that the first 110 and second pulley means 120 and the belt bearing means 130 all rotate together in the same direction at the same speed. Meanwhile, the second pulley means 120 is induced by the loading to rotate relative to the first 110 in the opposite direction. This load-induced relative rotation between the first 110 and second pulley means 120 increases the pitch 140 by adjustment in the cooperation between the belt bearing means 130 and the first 141 and second pitch setting means 142. This pitch-increase adjustment is continued until fixed length of the belt 180 allows no further relative movement between the two pulley means 110 and 120. Increased belt tension due to increased transmission power induces increased pressure of the belt 180 that presses onto the belt bearing means 130, and belt slip in the pulley apparatus is therefore prevented.

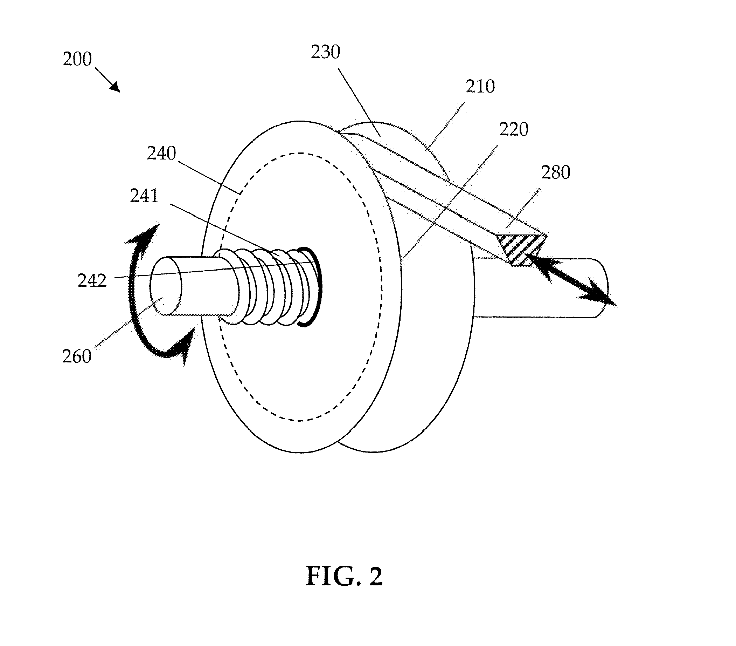

FIG. 2 shows a self-tensioning pulley apparatus 200 in accordance with an embodiment of the present invention having a cone-based pulley means. The self-tensioning pulley assembly 200 of FIG. 2 has a first cone 210 and a second cone 220. The first cone 210 is fixed coaxial to the power shaft 260. The second cone 220 is coaxially rotatable relative to the first cone 210 and has a screw threading 242 made to the center hole thereof that screw-engages with a corresponding screw threading 241 of the power shaft 260. Belt bearing surfaces 230 of the two cones 210 and 220 provide and maintain a gross bearing surface to bear the belt 280 at a pitch 240 by a cooperation with the power shaft screw threading 241 and the matched screw threading 242 of the second cone 220.

In operating, transmission of power loads the entire cone-based pulley apparatus 200 so that the first cone 210 that is fixed to the power shaft 260, the second cone 220 and surface 230 of the two cones all rotate together in the same direction at the same speed. Meanwhile, the second cone 220 is induced by the loading to rotate relative to the first cone 210 in the opposite direction. This load-induced relative rotation between the two cones increases the pitch 240 by adjustment in the cooperation between the cone surfaces 230 and the matched screw threading 241 and 242 respectively of the power shaft 260 and the second cone 220. This pitch-adjustment is continued until fixed length of the belt 280 allows no further relative movement between the two cones. Increased belt tension due to increased transmission power induces increased pressure of the belt 280 that presses onto the cone surfaces 230, and belt slip in the pulley apparatus is therefore prevented.

Cooperation of elements of the cone-based system tightens the belt as the pulley apparatus 200 is operating under load. As operation loading causes the belt 280 to drag the second cone to rotate relative to the first, the screw threading engagement between the second cone 220 and the power shaft 260 sends the two cones to move closer to each other. This increases the pitch 240 of the cone surface contacts, which in turn tightens the belt 280.

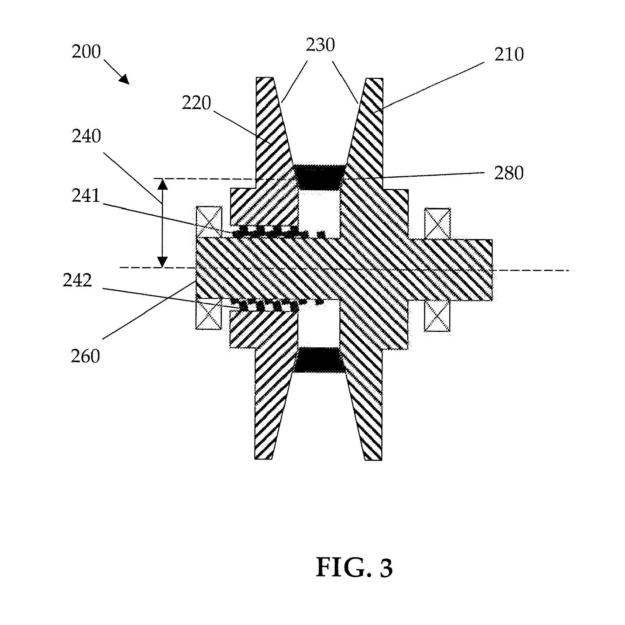

FIG. 3 shows the cross section of the cone-based pulley apparatus 200 of FIG. 2 taken along a plane passing through the central axis of the pulley apparatus. The cross-sectional view serves to reveal some more detail of the apparatus of FIG. 2.

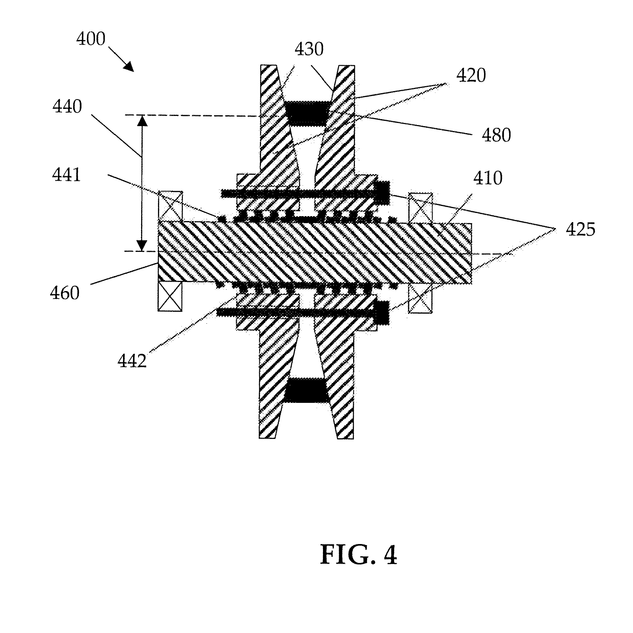

FIG. 4 is the cross section of another cone-based pulley apparatus. The pulley apparatus 400 of FIG. 4 is slightly different from that of FIG. 2 (and 3) but operates the same principle. The self-tensioning pulley assembly 400 of FIG. 4 also has a pair of two cones 420. Both cones 420 are coaxially rotatable relative to the power shaft 460 and each has a screw threading 442 made to the center hole thereof that screw-engages with a corresponding screw threading 441 of the power shaft 460. Note that the screw threading for the two cones are opposite screw threading. Belt bearing surfaces 430 of the two cones 420 provide and maintain a gross bearing surface to bear the belt 480 at a pitch 440 by a cooperation with the power shaft screw threading 441 and each of the matched but opposite screw threading of the pair of cones 420.

In operating, transmission of power loads the entire cone-based pulley apparatus 400 so that the pair of two cones 420, the power shaft 460 and surface 430 of the two cones all rotate together in the same direction at the same speed. Meanwhile, the pair of cones 420 is induced by the loading to rotate relative to the power shaft 460 in the opposite direction. This load-induced relative rotation between the pair of cones and the power shaft increases the pitch 440 by adjustment in the cooperation between the belt-contacted cone surfaces 430 and the matched pair of screw threading 441 and 442 respectively of the power shaft 460 and the two cones 420. This pitch-adjustment is continued until fixed length of the belt 480 allows no further relative movement between the two cones 420. Increased belt tension due to increased transmission power induces increased pressure of the belt 480 that presses onto the cone surfaces 430, and belt slip in the pulley apparatus is therefore prevented.

Cooperation of elements of the cone-based system of FIG. 4 tightens the belt 480 as the pulley apparatus 400 is operating under load. As operation loading causes the belt 480 to drag the two cones 420 to rotate relative to the power shaft 460, opposite screw threading engagements between the two cones and the shaft sends the two cones to move closer to each other. This increases the pitch 440 of the cone surface contacts, which in turn tightens the belt 480.

A cone-synchronizing means can be used in the cone-based pulley assembly 400 of FIG. 4. For example, one or more pins 425 allows the two cones 420 to alter relative inter-distance along the shaft 460 while maintaining fixed in terms of relative angular phase.

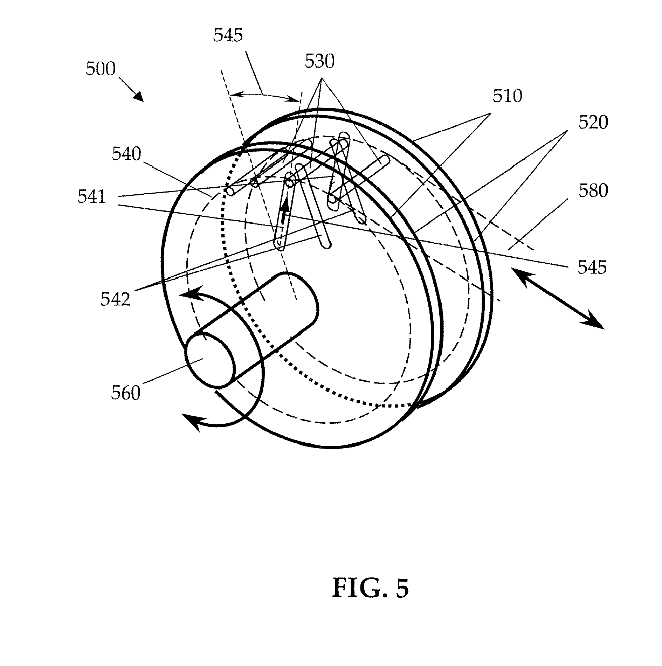

FIG. 5 shows a pulley apparatus 500 based on disc pulley means having intersecting radial slots. The pulley apparatus 500 has a first pair of discs 510, another second pair of discs 520 and a number of belt bearing pins 530. The first pair of discs 510 is fixed to the power shaft 560 coaxially and has a number of tilted raid slots 541. The second pair of discs 520 is coaxial with and rotatable relative to the first pair of discs 510 and has the same number of pin deploying radial slots 542 each intersecting the tilted radial slots 541 of the first pair of discs 510. The belt bearing pins 530 can be used to maintain a gross bearing surface to bear the belt 580 at a pitch 540 by a cooperation with the tilted radial slots of the first pair of discs 510 and the pin deploying radial slots 542 of the second pair of discs 520.

In operation, transmission of power loads the entire pulley apparatus 500 so that the two pairs of discs 510 and 520 and the belt bearing pins 530 all rotate together in the same direction at the same speed. Meanwhile, the second pair of discs 520 is induced by the loading to rotate relative to the first pair 510 in the opposite direction. This load-induced relative rotation between the two pair of discs increases the pitch 540 by adjustment in the cooperation between pins 530 and the intersecting sets of radial slots 541 and 542 respectively of the two pairs of discs until fixed length of the belt 580 allows no further relative movement between the two pairs of discs. Increased belt tension due to increased transmission power induces increased pressure of the belt 580 that presses onto the belt bearing pins 530, and belt slip in the pulley apparatus is therefore prevented.

Cooperation of elements of the disc-based system of FIG. 5 tightens the belt 580 as the pulley apparatus 500 is operating under load. As operation loading causes the belt 580 to drag each belt-engaged pin 530 in the tilted radial slot 541 of the first pair of discs 510 to slide outwardly and rearwardly as shown by the pointing arrow 545, the second pair of discs 520 is pushed to rotate relative to the power shaft 560. This increases the pitch 540 of the belt bearing pins 530, which in turn tightens the belt 580.

Note that slots 541 of the first pair of discs 510 each tilts away from the radial line rearwardly against the direction of power drive. When used as a driven pulley apparatus of a belt drive, the slots should tilt forwardly against the direction of load in the system.

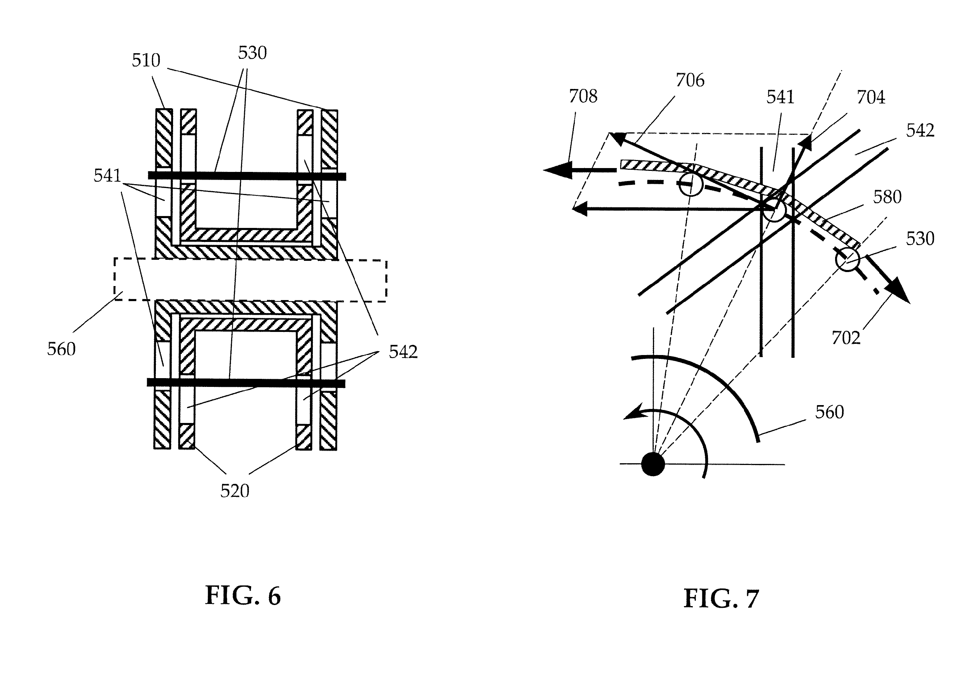

FIG. 6 is the cross section of the disc-based pulley apparatus 500 of FIG. 5 taken along a plane passing through the central axis of the pulley apparatus. The cross-sectional view serves to explain some more detail of the apparatus of FIG. 5.

FIG. 7 explains the belt tightening mechanism of the pulley apparatus 500 of FIG. 5. The cooperation of the elements of the pulley apparatus, namely the first pair of discs 510 with their tilted radial slots 541, the second pair of discs 520 with their pin deploying radial slots 542 and the belt bearing pins 530, to work together to establish a mechanism that exerts tightening force on the belt 580. Tilting of each of the radial slots 541 of the first pair of discs 510 distributes a component 704 of the load 702 that acts outwardly onto the belt 580 as the pulley apparatus is under load by a drive force 706 when used as the driven member of a belt drive driven in the counterclockwise direction 708. When used as the driving member, direction of rotation is opposite, and the directions of drive and load forces are swapped.

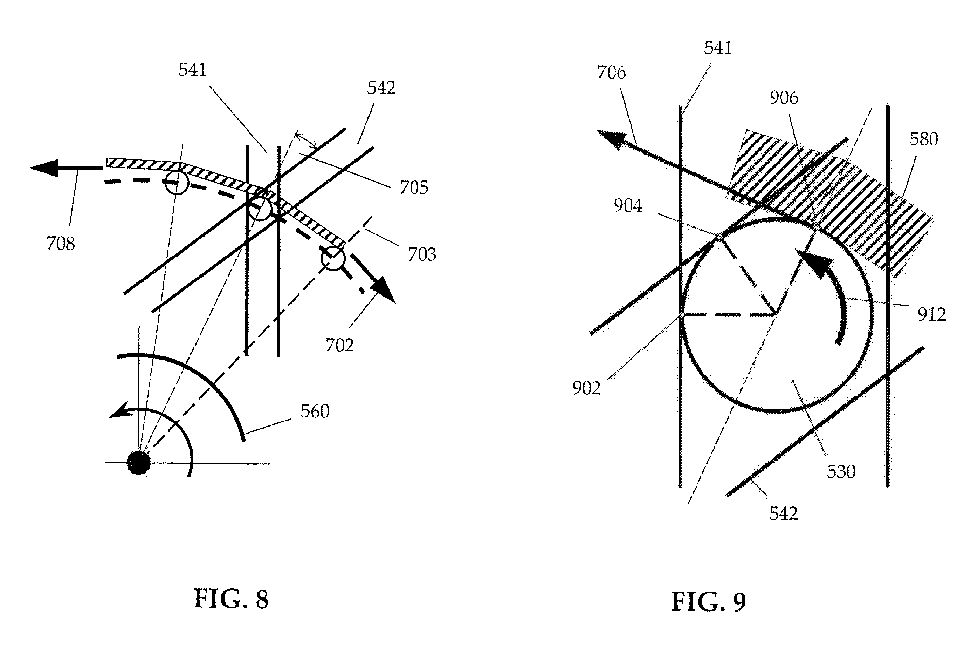

FIG. 8 illustrates the cooperation of the belt bearing pin, tilted radial slot and pin deploying radial slot for the type of pulley apparatus 500 of FIG. 5. The pulley apparatus illustrated is used as a driven pulley of a belt drive, wherein each of the radial slots 541 of the first pair of discs tilts away from the normal 703 of the direction of load 702 at its outer ends for an angle shown by 705. By contrast, each pin deploying radial slot 542 of the second pair of discs intersects the slots 541 of the first pair.

In the case of use of the pulley apparatus of FIG. 8 as a driving pulley, direction of rotation is reversed, and the directions of drive and load are swapped. Such pulley apparatus is equally applicable either as a driving or a driven member, or both, in a belt drive.

FIG. 9 details the cooperation of FIG. 8. The illustrated cooperation between the elements of the pulley apparatus under load is applicable either when used as driving or driven member in a belt drive. Selection of material and surface condition design at the three contacts, namely 902 between the belt bearing pin 530 and its tilted radial slot 541, 904 between its pin deploying radial slot 542 and pin 530, and 906 between the belt 580 and the pin 530 respectively, provides sufficient frictional resistance at all three contacts to prevent on-site rotation of the pin shown by the counterclockwise arrow 912. Such on-site rotation, when occurs, results in the lost of the capability to transmit power by the pulley apparatus.

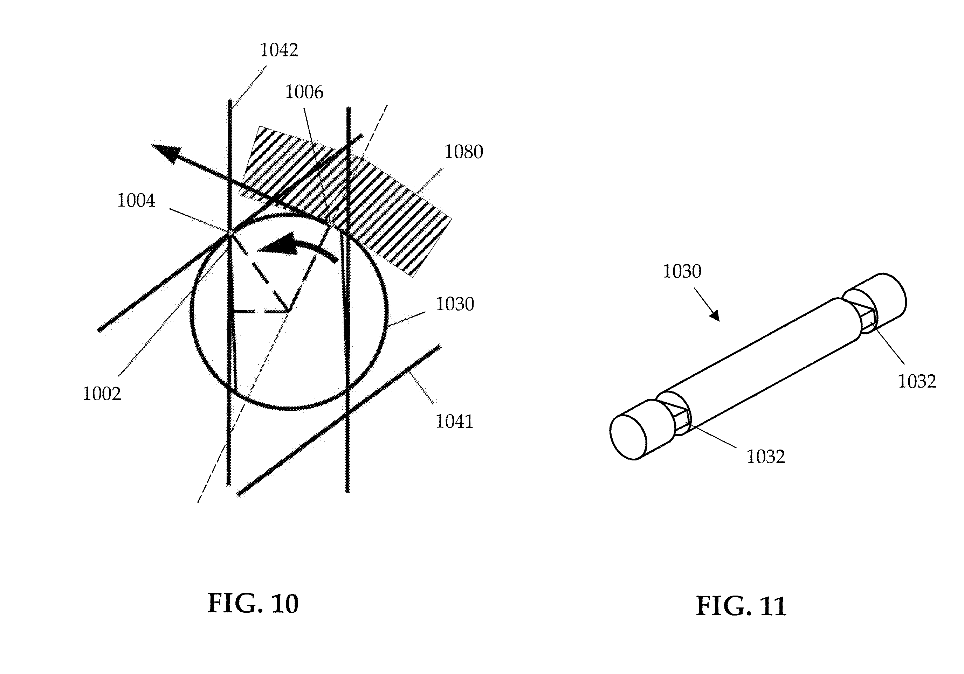

FIG. 10 illustrates the cooperation of the belt bearing pin 1030, tilted radial slot 1041 and pin deploying radial slot 1042 for another of the type of pulley apparatus of FIG. 5. The illustrated cooperation between the elements of the pulley apparatus under load is applicable either when used as driving or driven member in a belt drive. On-site rotation of belt bearing pins 1030 is prevented by the use of a shaped cross section that stops any pin rotation. Cross section of the pin can be with an elongated length that is greater than the width of the slot.

FIG. 11 shows a belt bearing pin 1030 for the pulley apparatus of FIG. 10 that is free from on-site spinning. Sections 1032 at both ends of the belt bearing pin that are in contact with either the tilted or the pin deploying radial slot are made into an elongated cross section to prevent the pin from spinning on-site under load.

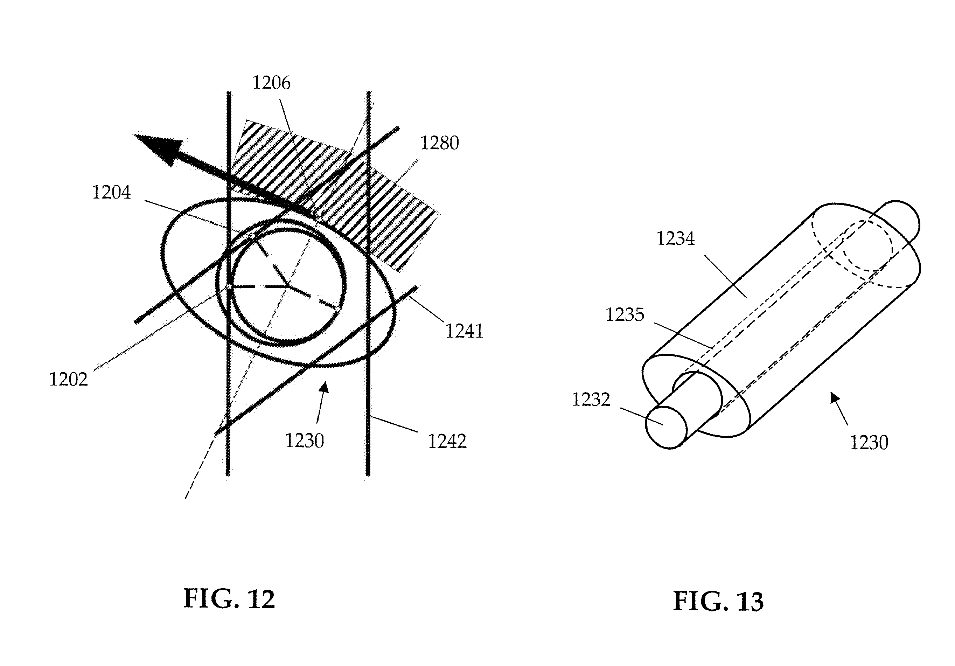

FIG. 12 illustrates the cooperation of the belt bearing pin 1230, tilted radial slot 1241 and pin deploying radial slot 1242 for yet another of the type of pulley apparatus of FIG. 5. The illustrated cooperation between the elements of the pulley apparatus under load is applicable either when used as driving or driven member in a belt drive. Lost of transmission due to on-site rotation of pin is prevented by the use of a belt bearing pin assembly 1230. Elongated cross section of the friction piece prevents any rotation under belt drag once the belt is tightened by load.

FIG. 13 shows a belt bearing pin assembly 1230 for the pulley apparatus of FIG. 12 that is free from on-site spinning. The belt bearing pin assembly 1230 has a friction piece 1234 directly in contact with the belt while a pin 1232 inserted loosely inside its hollow space 1235 is in contact with the tilted and the pin deploying radial slots.

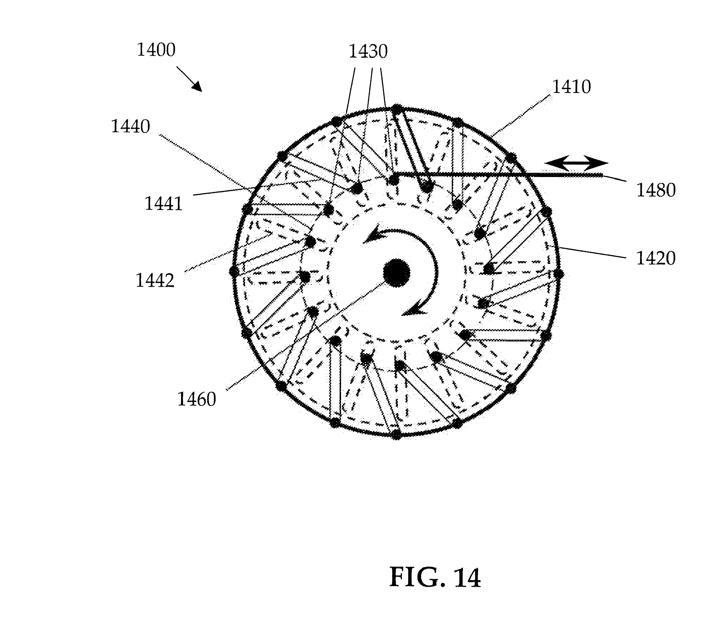

FIG. 14 shows a pulley apparatus based on disc pulley means having inwardly swinging belt bearing pins. The self-tensioning pulley apparatus has a first pair of discs 1410, a second pair of discs or at least one disc 1420, and a number of inwardly swinging pins 1430. The first pair of discs 1410 is fixed to the power shaft 1460 coaxially and has the same number of swinging pin arms 1441 each carrying a corresponding one of the inwardly swinging pins 1430. The second pair of discs or the at least one disc 1420 is coaxial with and rotatable relative to the first pair of discs 1410 and has the same number of pin deploying radial slots 1442 each slidingly receiving a corresponding one of the inwardly swinging pins 1430. The inwardly swinging pins 1430 can be used to maintain a gross bearing surface to bear the belt 1480 at a pitch 1440 by a cooperation with the first pair of discs 1410 and the second pair or the at least one disc 1420.

In operation, transmission of power loads the entire pulley apparatus 1400 so that the first pairs of discs 1410, the second pair or the at least one disc 1420 and the inwardly swinging pins 1430 all rotate together in the same direction at the same speed. Meanwhile, the second pair or the at least one disc 1420 is induced by the loading to rotate relative to the first pair 1410 in the opposite direction. This load-induced relative rotation between the first and second pair of discs increases the pitch 1440 by adjustment in the cooperation between the inwardly swinging pins 1430, the pin arms 1441 and the pin deploying radial slots 1442 until fixed length of the belt 1480 allows no further relative movement between the two pairs of discs. Increased belt tension due to increased transmission power induces increased pressure of the belt 1480 that presses onto the belt bearing inwardly swinging pins 1430, and belt slip in the pulley apparatus is therefore prevented.

Cooperation of elements of the disc-based system of FIG. 14 tightens the belt as the pulley apparatus is operating under load. As operation loading causes the belt 1480 to drag each belt-engaged inwardly swinging pin 1430 in the pin deploying radial slot 1442 of the second pair of discs (or the at least one disc) 1420 to swing inwardly and rearwardly, pushing the second pair of discs 1420 to rotate relative to the first pair 1410. This increases the pitch 1440 of the inwardly swinging pins 1430, which in turn tightens the belt 1480.

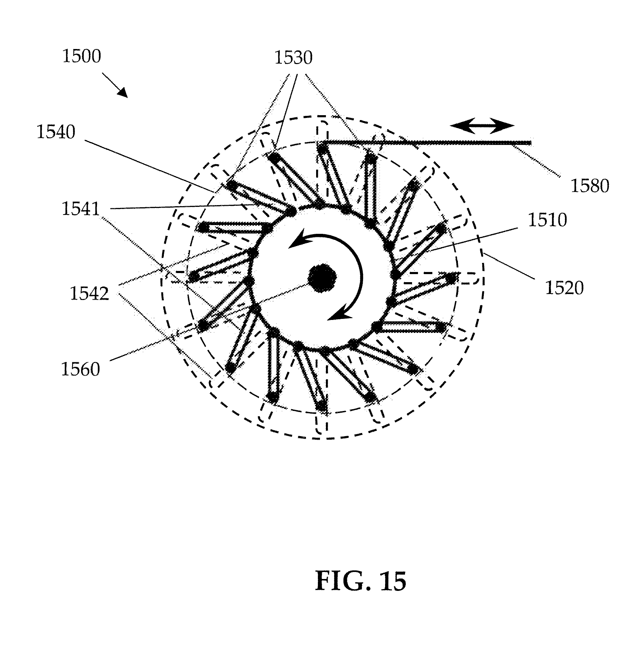

FIG. 15 shows a pulley apparatus 1500 based on disc pulley means having outwardly swinging belt bearing pins as compared to FIG. 14. The self-tensioning pulley apparatus 1500 has a first pair of discs 1510, a second pair of discs or at least one disc 1520, and a number of outwardly swinging pins 1530. The first pair of discs 1510 is fixed to the power shaft 1560 coaxially and has the same number of swinging pin arms 1541 each carrying a corresponding one of the outwardly swinging pins 1530. The second pair of discs or the at least one disc 1520 is coaxial with and rotatable relative to the first pair of discs 1510 and has the same number of pin deploying radial slots 1542 each slidingly receiving a corresponding one of the outwardly swinging pins 1530. The outwardly swinging pins 1530 can be used to maintain a gross bearing surface to bear the belt 1580 at a pitch 1540 by a cooperation with the first pair of discs 1510 and the second pair or the at least one disc 1520.

In operation, transmission of power loads the entire pulley apparatus 1500 so that the first pairs of discs 1510, the second pair or the at least one disc 1520 and the outwardly swinging pins 1530 all rotate together in the same direction at the same speed. Meanwhile, the second pair or the at least one disc 1520 is induced by the loading to rotate relative to the first pair 1510 in the opposite direction. This load-induced relative rotation between the first and second pair of discs increases the pitch 1540 by adjustment in the cooperation between the outwardly swinging pins 1530, the pin arms 1541 and the pin deploying radial slots 1542 until fixed length of the belt 1580 allows no further relative movement between the two pairs of discs. Increased belt tension due to increased transmission power induces increased pressure of the belt 1580 that presses onto the belt bearing outwardly swinging pins 1530, and belt slip in the pulley apparatus is therefore prevented.

Cooperation of elements of the disc-based system 1500 of FIG. 15 tightens the belt 1580 as the pulley apparatus is operating under load. As operation loading causes the belt 1580 to drag each belt-engaged outwardly swinging pin 1530 in the pin deploying radial slot 1542 of the second pair of discs (or the at least one disc) 1520 to swing outwardly and rearwardly, pushing the second pair of discs 1520 to rotate relative to the first pair. This increases the pitch 1540 of the outwardly swinging pins 1530, which in turn tightens the belt 1580.

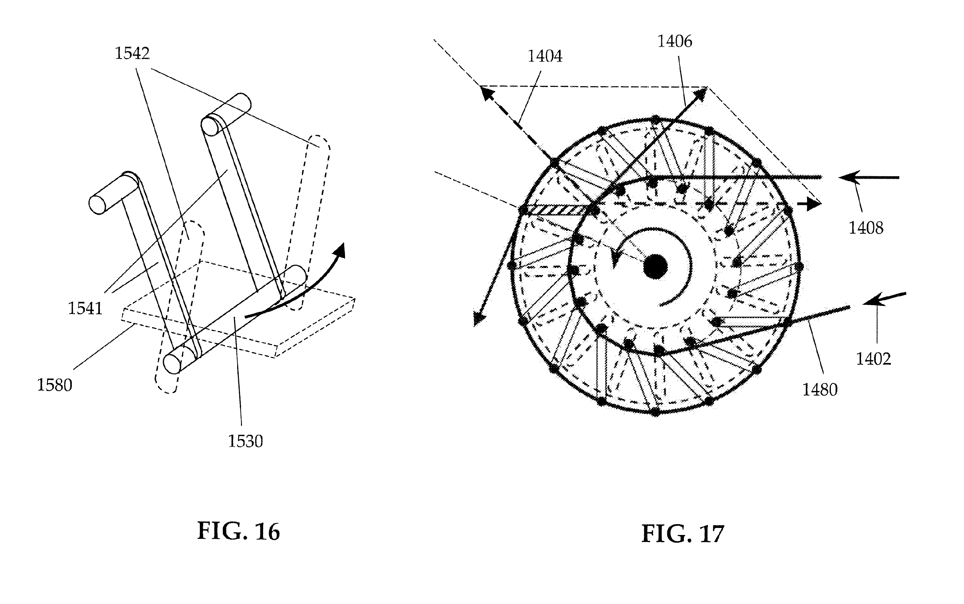

FIG. 16 illustrates the cooperation of the belt bearing swinging pin 1530, pin arm 1541 and pin deploying radial slot 1542 for the type of pulley apparatus 1500 of FIG. 14.

FIG. 17 explains the belt tightening mechanism of the pulley apparatus 1400 of FIG. 14. The cooperation of the elements of the pulley apparatus, namely the first pair of discs 1410 with their swinging pin arms 1441, the second pair of discs 1420 with their pin deploying radial slots 1442 and the belt bearing swinging pins 1430, to work together to establish a mechanism that exerts tightening force on the belt 1480. Rearward swing of each of the pin arms 1441 of the first pair of discs 1410 distributes a component 1404 of the load 1406 that acts outwardly onto the belt 1480 as the pulley apparatus is under load when used as the driving member of a belt drive. When used as the driven member, direction of rotation is opposite, and the directions of drive and load forces are swapped.

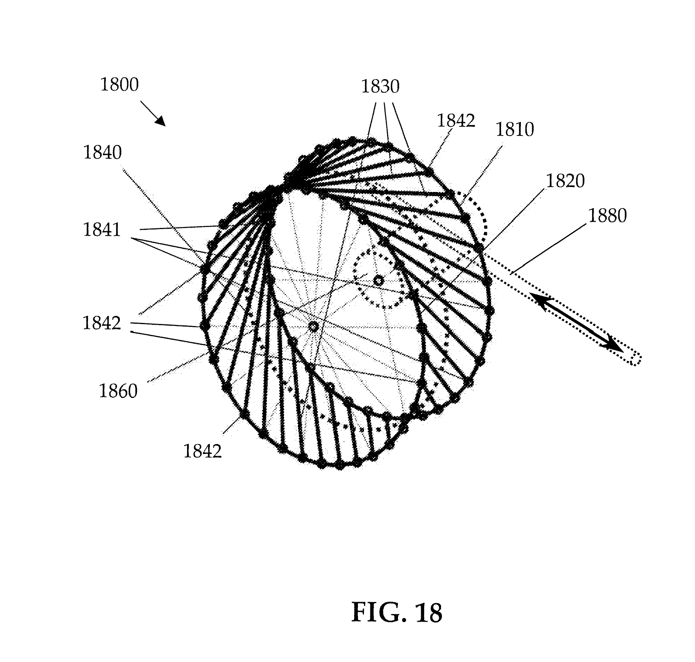

FIG. 18 shows a self-tensioning pulley apparatus based on swiveling pins actuated by disc pulley means. The self-tensioning pulley apparatus 1800 has a first disc 1810, a second disc 1820 and a number of swiveling pins 1830. The first disc 1810 is fixed to the power shaft 1860 coaxially and has the same number of pin-end bearing 1841 each receiving one end of a corresponding one of the swiveling pins 1830. The second disc 1820 is coaxial with and rotatable relative to the first disc 1810 and has the same number of pin-end bearings 1842 each receiving the other end of a corresponding of the swiveling pins 1830. The swiveling pins 1830 can be used to maintain a gross bearing surface to bear the belt 1880 at a pitch 1840 by a cooperation with the first and second discs.

In operation, transmission of power loads the entire pulley apparatus 1800 so that the first and second discs 1810 and 1820 and the swiveling pins 1830 all rotate together in the same direction at the same speed. Meanwhile, the second disc 1820 is induced by the loading to rotate relative to the first 1810 in the opposite direction. This load-induced relative rotation between the first and second discs increases the pitch 1840 by adjustment in the cooperation between the swiveling pins 1830 and the two sets of pin-end bearings 1841 and 1842 until fixed length of the belt 1880 allows no further relative movement between the two discs. Increased belt tension due to increased transmission power induces increased pressure of the belt 1880 that presses onto the belt bearing swiveling pins 1830, and belt slip in the pulley apparatus is therefore prevented.

Cooperation of elements of the disc-based system of FIG. 18 tightens the belt 1880 as the pulley apparatus 1800 is operating under load. As operation loading causes the belt 1880 to drag each belt-engaged swiveling pin 1830 to push the second disc 1820 to rotate relative to the first 1810, pushing the center point of the swiveling pin 1830 radially outward, thereby increasing the pitch 1840 of the pin-belt contacts, which in turn tightens the belt.

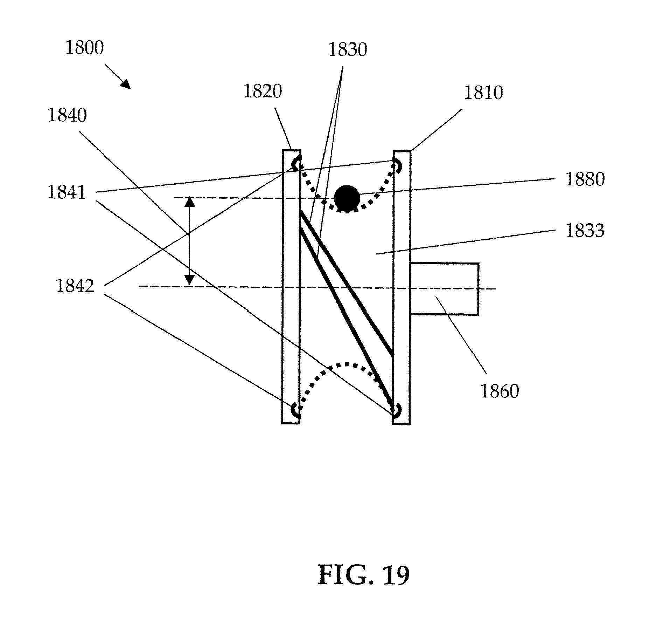

FIG. 19 is the side view of the pulley apparatus 1880 of FIG. 18. Note the approximate surface of a hyperboloid 1833 created by all the swiveling pins 1830 as the first and second discs 1810 and 1820 settle to each other at a relative angle determined by the length of the belt 1880.

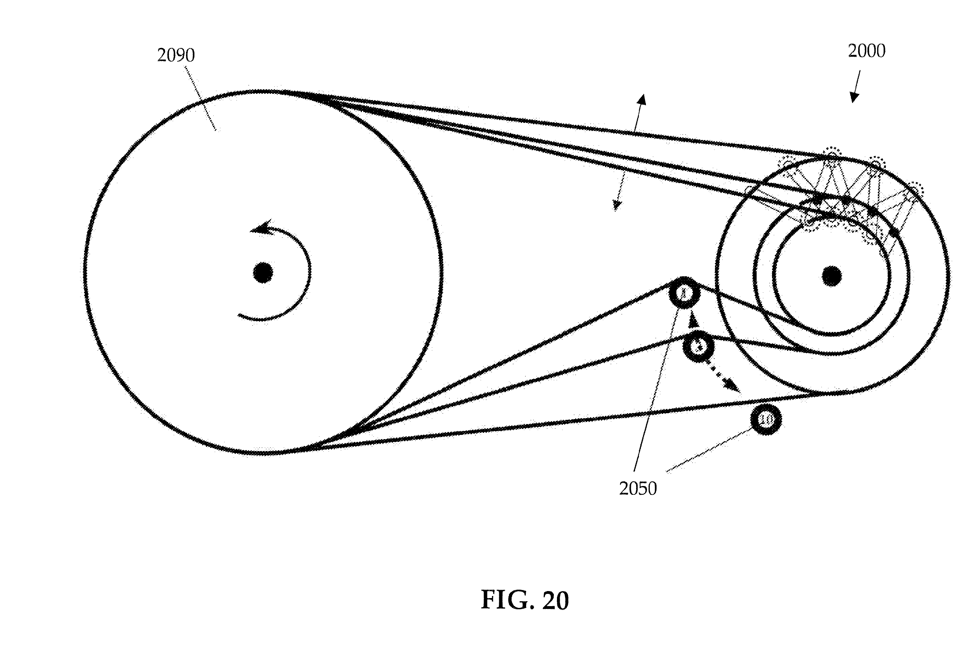

FIG. 20 schematically outlines a variable speed belt drive having a self-tensioning pulley apparatus 2000 used as the driven pulley. Effective pitch of the driven member is locked whenever a torque is applied to drive a load. Speed ratio is determined by the position of the control roller that presses onto the belt. Position of the roller 2050 can be changed when the pulley apparatus is loaded or not loaded. As a comparison, fixed speed application is similar. In a fixed speed system, length of the radial slot need not be extensive, only an allowance to cover the belt length tolerance is required.

While the above is a full description of the specific embodiments, various modifications, alternative constructions and equivalents may be used. Therefore, the above description and illustrations should not be taken as limiting the scope of the present invention.

## Claims

1. A pulley apparatus (100) of a belt drive for transmitting rotary power through a power shaft (160) using a belt (180), said apparatus comprising:
a first pulley means (110) fixed coaxial to said power shaft (160) and having a first pitch setting means (141);
a second pulley means (120) coaxially rotatable relative to said first pulley means (110) and having a second pitch setting means (142); and
a belt bearing means (130) maintaining a gross bearing surface to bear said belt (180) at a pitch (140) by a cooperation with said first and second pitch setting means (141, 142);
wherein transmission of power loads said pulley apparatus (100) in which
said first and second pulley means (110, 120) and said belt bearing means (130) all rotate together in the same direction at the same speed while said second pulley means (120) is induced by said loading to rotate relative to said first (110) in the opposite direction;
said load-induced relative rotation increases said pitch (140) by adjustment in said cooperation between said belt bearing means (130) and said first and second pitch setting means (141, 142) until fixed length of said belt (180) allows no further relative movement between said two pulley means (110,120); and
an increased belt tension due to increased transmitted power induces increased pressure of said belt (180) onto said belt bearing means (130) that prevents belt slip in the pulley apparatus (100) for a sustained power transmission.

2. The pulley apparatus of claim 1 wherein said first and second pulley means are cones (210, 220) and said belt bearing means is the surface (230) of said cones.

3. The pulley apparatus of claim 1 wherein said first and second pulley means are pairs of discs (510, 520) and said belt bearing means is a pin (530).

4. The pulley apparatus of claim 1 wherein said first and second pulley means are pairs of discs (1410, 1420) and said belt bearing means is an inwardly swinging pin (1430).

5. The pulley apparatus of claim 1 wherein said first and second pulley means are pairs of discs (1510, 1520) and said belt bearing means is an outwardly swinging pin (1530).

6. The pulley apparatus of claim 1 wherein said first and second pulley means are single discs (1810, 1820) and said belt bearing means is a swiveling pin (1830).
